(19) Europäisches Patentamt / European Patent Office / Office européen des brevets

(11) **EP 4 776 538 A1**

(12) **EUROPEAN PATENT APPLICATION**
published in accordance with Art. 153(4) EPC

(43) Date of publication:
**15.07.2026  Bulletin 2026/29**

(21) Application number: **24869823.5**

(22) Date of filing: **04.06.2024**

(51) International Patent Classification (IPC):
*H04L 1/00* (2006.01)

(52) Cooperative Patent Classification (CPC):
**H04L 1/00**

(86) International application number:
**PCT/CN2024/097179**

(87) International publication number:
**WO 2025/066261 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **28.09.2023  CN 202311285163**

(71) Applicant: HUAWEI TECHNOLOGIES CO., LTD.
**Shenzhen 518129 (CN)**

(72) Inventors:
• **YANG, Xiaoling**
  **Shenzhen, Guangdong 518129 (CN)**
• **HUANG, Qinhui**
  **Shenzhen, Guangdong 518129 (CN)**
• **HUANG, Kechao**
  **Shenzhen, Guangdong 518129 (CN)**
• **MA, Huixiao**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA PROCESSING METHOD AND RELATED APPARATUS**

(57)    Embodiments of this application disclose a data processing method and a related apparatus, to implement inner encoding with a higher gain, and improve performance of concatenated coding, thereby facilitating application in a 1.6T ZR scenario. Specifically, an encoded data frame obtained through outer encoding is obtained, where the encoded data frame includes v bits, and v is an integer greater than 1. Then, a first bit set is obtained based on the encoded data frame and added $d_{pad}$ padding bits, where a quantity of bits in the first bit set is $v+d_{pad}$, $d_{pad}$ is an integer greater than or equal to 1. Next, convolutional interleaving is performed on the first bit set to obtain a second bit set. Further, inner encoding is performed on the second bit set to obtain a third bit set, where the third bit set includes R codewords obtained through second FEC encoding, each codeword includes K information bits and N-K parity bits, totaling N bits, R, N, and K are all integers greater than 1, $v+d_{pad}=R \times K$, and $d_{pad}$ is not exactly divisible by K.

FIG. 4

EP 4 776 538 A1

## Description

This application claims priority to Chinese Patent Application No. 202311285163.4, filed with the China National Intellectual Property Administration on September 28, 2023 and entitled "DATA PROCESSING METHOD AND RELATED APPARATUS", which is incorporated herein by reference in its entirety.

## TECHNICAL FIELD

Embodiments of this application relate to the field of optical communication, and in particular, to a data processing method and a related apparatus.

## BACKGROUND

Driven continuously by 5G, cloud computing, big data, artificial intelligence, and the like, an optical communication system and an optical transport network (optical transport network, OTN) are developing toward a large capacity and an ultra-high speed. Transmitted data is corrected by using forward error correction (forward error correction, FEC) encoding, so that bit error transmission can be avoided, and original data sent from a transmitter can be recovered from received data.

In a 400G ZR scenario, an optical module uses CFEC as an error correction encoding scheme. A staircase code is used as an outer code, and a double-extended Hamming (Hamming) code is used as an inner code. In a future 1.6T ZR scenario, because a transmission rate is greatly improved, performance of an existing CFEC scheme cannot meet a link budget of the scenario.

## SUMMARY

Embodiments of this application provide a data processing method and a related apparatus, to implement inner encoding with a higher gain, and improve performance of concatenated coding, thereby facilitating application in a 1.6T ZR scenario.

According to a first aspect, an embodiment of this application provides a data processing method. First, an encoded data frame obtained through first forward error correction (forward error correction, FEC) encoding is obtained, where first FEC encoding may be considered as outer encoding, the encoded data frame includes v bits, and v is an integer greater than 1. Then, a first bit set is obtained based on the encoded data frame and added $d_{pad}$ padding bits, where a quantity of bits in the first bit set is $v+d_{pad}$, $d_{pad}$ is an integer greater than or equal to 1. Next, convolutional interleaving is performed on the first bit set to obtain a second bit set. Further, second FEC encoding is performed on the second bit set to obtain a third bit set, and second FEC encoding may be considered as inner encoding. The third bit set includes R codewords obtained through second FEC encoding, each codeword includes K information bits and N-K parity bits, totaling N bits, R, N, and K are all integers greater than 1, $v+d_{pad}=R\times K$, and $d_{pad}$ is not exactly divisible by K.

In this implementation, for the encoded data frame obtained through outer encoding, $d_{pad}$ padding bits are added to obtain the first bit set, convolutional interleaving is performed on the first bit set to obtain the second bit set, and inner encoding is performed on the second bit set to obtain the third bit set including R inner codewords. Each codeword includes K information bits and N-K parity bits, totaling N bits, and $d_{pad}$ is not exactly divisible by K. In other words, in this solution, an inner encoding scheme with a higher gain is provided, and a Hamming code with a 1-bit error correction capability may be replaced by a BCH code or an extended BCH code with a 2-bit error correction capability, to improve performance of concatenated coding. In addition, adding $d_{pad}$ padding bits helps a receiver better synchronize an inner code, an outer code, and convolutional interleaving.

In some possible implementations, performing convolutional interleaving on the first bit set to obtain the second bit set includes: delaying the bits in the first bit set based on P delay lines. P is an integer greater than 1, quantities of storage units included in the delay lines are different from each other, a delay line with a smallest quantity of storage units includes zero storage units, and a difference between quantities of storage units of every two adjacent delay lines is Q. Each storage unit is configured to store d bits, input bits are sequentially input into the P delay lines based on sequence numbers of the P delay lines, and d bits are input into each delay line for a single time and d bits are output from each delay line for a single time. Consecutive $P\times d$ bits output after convolutional interleaving include d bits output from each delay line, and both Q and d are integers greater than or equal to 1. This implementation provides a specific implementation of convolutional interleaving, and has a good practical effect.

In some possible implementations, K is exactly divisible by d, $P\times d$ is exactly divisible by K, and $R\times\dfrac{K}{d}$ is exactly divisible by P, so that $P\times d$ bits output by a convolutional interleaver through one polling can be mapped to an integer quantity of information bits in the inner codewords, thus facilitating hardware implementation. In addition, after convolutional interleaving is performed on one first bit set, a switch of the interleaver returns to an initial position, to achieve quick synchronization of the convolutional interleaver after synchronization of the inner code.

In some possible implementations, the second bit set includes R rows and K columns of bits, and K bits in each row in the second bit set are K bits output from $\frac{K}{d}$ delay lines. Performing second FEC encoding on the second bit set to obtain the third bit set includes: performing second FEC encoding on the K bits in each row in the second bit set to obtain N bits in each codeword in the third bit set. In this implementation, bits in the second bit set are distributed in R rows and K columns, so that inner encoding is separately performed on K bits in each row in the second bit set.

In some possible implementations, after performing second FEC encoding on the second bit set to obtain the third bit set, the method further includes: performing symbol mapping and polarization distribution on every 8 bits in the third bit set to obtain one dual-polarization (dual-polarization, DP)-16QAM symbol. Any one of an I component in an X polarization direction, a Q component in the X polarization direction, an I component in a Y polarization direction, and a Q component in the Y polarization direction of the DP-16QAM symbol is obtained by mapping two consecutive bits in one codeword, and the X polarization direction and the Y polarization direction are orthogonal to each other. In other words, any component of the DP-16QAM symbol is obtained by mapping two consecutive bits in a same codeword. In this way, 2 bits with different error probabilities in any component are evenly distributed to each inner codeword, which helps improve performance of inner encoding.

In some possible implementations, at least $2 \times \left\lfloor \frac{N}{8} \right\rfloor$ bits in the codeword are mapped to a same component of $\left\lfloor \frac{N}{8} \right\rfloor$ DP-16QAM symbols, at most $2 \times \left\lceil \frac{N}{8} \right\rceil$ bits in the codeword are mapped to a same component of $\left\lceil \frac{N}{8} \right\rceil$ DP-16QAM symbols, $\lfloor a \rfloor$ represents rounding down a, and $\lceil a \rceil$ represents rounding up a. Considering inconsistent error probabilities of the four components, each inner codeword may be further evenly mapped to the four components, to further improve performance of inner encoding.

In some possible implementations, eight consecutive bits from an $(8i)^{th}$ bit to an $(8i+7)^{th}$ bit in the codeword are mapped to four different components of four DP-16QAM symbols, f consecutive bits from an ($8 \times \left\lfloor \frac{N}{8} \right\rfloor$)$^{th}$ bit to an $(N-1)^{th}$ bit in the codeword are mapped to f/2 different components of f/2 DP-16QAM symbols, $0 \leq i < \left\lfloor \frac{N}{8} \right\rfloor$, and $f = N - 8 \times \left\lfloor \frac{N}{8} \right\rfloor$. In addition, two adjacent bits from each of four consecutive codewords, totaling 8 bits, are mapped to one DP-16QAM symbol. In this mapping manner, each inner codeword may be evenly mapped to the four components of the DP-16QAM symbol, and component-related errors may not be aggregated in some inner codewords, to improve error tolerance.

In some possible implementations, N is exactly divisible by 8, and eight consecutive bits in the codeword are mapped to one DP-16QAM symbol. In this mapping manner, each inner codeword may be evenly mapped to the four components of the DP-16QAM symbol, and component-related errors may not be aggregated in some inner codewords, to improve error tolerance and facilitate hardware implementation.

In some possible implementations, before obtaining the encoded data frame obtained through first FEC encoding, the method further includes: performing data distribution on a first data stream to obtain four second data streams; and performing first FEC encoding on each second data stream to obtain the encoded data frame. This data processing method is compatible with throughput rates such as 1.6T, 800G, and 400G.

In some possible implementations, before performing convolutional interleaving on the first bit set to obtain the second bit set, the method further includes: scrambling the first bit set, to improve balance between 0 bits and 1 bits in the first bit set.

In some possible implementations, second FEC encoding uses BCH encoding or extended BCH encoding over a finite field GF($2^m$) for 2-bit error correction, to improve performance of concatenated coding.

In some possible implementations, the encoded data frame includes r rows and w columns of bits; and r=119, and w=10970; or r=595, and w=2194.

In some possible implementations, K=110, and N=126; K=112, and N=128; or K=113, and N=128. In other words, when a length of the inner codeword is kept unchanged at 128 bits or the length of the inner codeword is slightly reduced, decoding complexity is effectively controlled, and an error correction capability of the inner codeword is improved from correcting a 1-bit error to correcting a 2-bit error, to effectively improve performance of concatenated coding.

In some possible implementations, K=110, N=126, P=16, d=110, and $d_{pad}$=490; K=112, N=128, P=16, d=112, and $d_{pad}$=938; K=113, N=128, P=16, d=113, and $d_{pad}$=1754; K=112, N=128, P=62, d=56, and $d_{pad}$=42; or K=110, N=126, P=24, d=55, and $d_{pad}$=50. This allows bit padding and convolutional interleaving to better adapt to the inner encoding scheme with improved performance provided in this solution

According to a second aspect, an embodiment of this application provides a data processing apparatus. The data processing apparatus includes an obtaining unit, a padding unit, a convolutional interleaving unit, and an encoding unit. The obtaining unit is configured to obtain an encoded data frame obtained through first forward error correction FEC encoding, where the encoded data frame includes v bits, and v is an integer greater than 1. The padding unit is configured to obtain a first bit set based on the encoded data frame and added $d_{pad}$ padding bits, where a quantity of bits in the first bit set is v+$d_{pad}$, $d_{pad}$ is an integer greater than or equal to 1. The convolutional interleaving unit is configured to perform convolutional interleaving on the first bit set to obtain a second bit set. The encoding unit is configured to perform second FEC encoding on the second bit set to obtain a third bit set, where the third bit set includes R codewords obtained through second FEC encoding, each codeword includes K information bits and N-K parity bits, totaling N bits, R, N, and K are all integers greater than 1, v+$d_{pad}$=R×K, and $d_{pad}$ is not exactly divisible by K.

In some possible implementations, the convolutional interleaving unit is specifically configured to: delay the bits in the first bit set based on P delay lines, where P is an integer greater than 1, quantities of storage units included in the delay lines are different from each other, a delay line with a smallest quantity of storage units includes zero storage units, a difference between quantities of storage units of every two adjacent delay lines is Q, each storage unit is configured to store d bits, input bits are sequentially input into the P delay lines based on sequence numbers of the P delay lines, d bits are input into each delay line for a single time and d bits are output from each delay line for a single time, consecutive P×d bits output after convolutional interleaving include d bits output from each delay line, and both Q and d are integers greater than or equal to 1.

In some possible implementations, K is exactly divisible by d, P×d is exactly divisible by K, and $R \times \dfrac{K}{d}$ is exactly divisible by P.

In some possible implementations, the second bit set includes R rows and K columns of bits, and K bits in each row in the second bit set are K bits output from $\dfrac{K}{d}$ delay lines. The encoding unit is specifically configured to perform second FEC encoding on the K bits in each row in the second bit set to obtain N bits in each codeword in the third bit set.

In some possible implementations, the data processing apparatus further includes a mapping unit. The mapping unit is configured to: perform symbol mapping and polarization distribution on every 8 bits in the third bit set to obtain one dual-polarization DP-16QAM symbol, where any one of an I component in an X polarization direction, a Q component in the X polarization direction, an I component in a Y polarization direction, and a Q component in the Y polarization direction of the DP-16QAM symbol is obtained by mapping two consecutive bits in one codeword, and the X polarization direction and the Y polarization direction are orthogonal to each other.

In some possible implementations, at least $2 \times \left\lfloor \dfrac{N}{8} \right\rfloor$ bits in the codeword are mapped to a same component of $\left\lfloor \dfrac{N}{8} \right\rfloor$ DP-16QAM symbols, at most $2 \times \left\lceil \dfrac{N}{8} \right\rceil$ bits in the codeword are mapped to a same component of $\left\lceil \dfrac{N}{8} \right\rceil$ DP-16QAM symbols, $\lfloor a \rfloor$ represents rounding down a, and $\lceil a \rceil$ represents rounding up a.

In some possible implementations, eight consecutive bits from an (8i)th bit to an (8i+7)th bit in the codeword are mapped to four different components of four DP-16QAM symbols, f consecutive bits from an ($8 \times \left\lfloor \dfrac{N}{8} \right\rfloor$)th bit to an (N-1)th bit in the codeword are mapped to f/2 different components of f/2 DP-16QAM symbols, $0 \le i < \left\lfloor \dfrac{N}{8} \right\rfloor$, and f=N$-8 \times \left\lfloor \dfrac{N}{8} \right\rfloor$. In addition, two adjacent bits from each of four consecutive codewords, totaling 8 bits, are mapped to one DP-16QAM symbol.

In some possible implementations, N is exactly divisible by 8, and eight consecutive bits in the codeword are mapped to one DP-16QAM symbol.

In some possible implementations, the data processing apparatus further includes a processing unit. Before the encoded data frame obtained through first FEC encoding is obtained, the processing unit is configured to: perform data distribution on a first data stream to obtain four second data streams; and perform first FEC encoding on each second data stream to obtain the encoded data frame.

In some possible implementations, the data processing apparatus further includes a scrambling unit. Before convolutional interleaving is performed on the first bit set to obtain the second bit set, the scrambling unit is configured to scramble the first bit set.

In some possible implementations, second FEC encoding uses BCH encoding or extended BCH encoding over a finite field GF($2^m$) for 2-bit error correction.

In some possible implementations, the encoded data frame includes r rows and w columns of bits; and r=119, and w=10970; or r=595, and w=2194.

In some possible implementations, K=110, and N=126; K=112, and N=128; or K=113, and N=128.

In some possible implementations, K=110, N=126, P=16, d=110, and $d_{pad}$ =490; K=112, N=128, P=16, d=112, and $d_{pad}$=938; K=113, N=128, P=16, d=113, and $d_{pad}$=1754; K=112, N=128, P=62, d=56, and $d_{pad}$=42; or K=110, N=126, P=24, d=55, and $d_{pad}$=50.

According to a third aspect, an embodiment of this application provides a chip. The chip includes a processor and a memory, the memory and the processor are connected to each other through a line, the memory stores instructions, and the processor is configured to perform the method described in any one of the implementations of the first aspect.

According to a fourth aspect, an embodiment of this application provides a data transmission system. The data transmission system includes a data sending device and a data receiving device. The data sending device is configured to perform the method described in any one of the implementations of the first aspect and send data to the data receiving device. The data receiving device is configured to perform an operation, for example, decoding the received data.

According to a fifth aspect, an embodiment of this application provides a computer-readable storage medium, where the computer-readable storage medium stores a computer program, and when the computer program is executed by a computer, the method described in any one of the implementations of the first aspect is implemented.

According to the foregoing technical solutions, it can be learned that embodiments of this application have the following advantages:

In this implementation, for an encoded data frame obtained through outer encoding, $d_{pad}$ padding bits are added to obtain a first bit set, convolutional interleaving is performed on the first bit set to obtain a second bit set, and inner encoding is performed on the second bit set to obtain a third bit set including R inner codewords. Each codeword includes K information bits and N-K parity bits, totaling N bits, and $d_{pad}$ is not exactly divisible by K. In other words, in this solution, an inner encoding scheme with a higher gain is provided, and a Hamming code with a 1-bit error correction capability may be replaced by a BCH code or an extended BCH code with a 2-bit error correction capability, to improve performance of concatenated coding. In addition, adding $d_{pad}$ padding bits helps a receiver better synchronize an inner code, an outer code, and convolutional interleaving.

## BRIEF DESCRIPTION OF DRAWINGS

FIG. 1 is a diagram of a communication system to which an embodiment of this application is applied;

FIG. 2 is a diagram of another communication system to which an embodiment of this application is applied;

FIG. 3 is a diagram of an implementation of a transmitter data processor according to an embodiment of this application;

FIG. 4 is a schematic flowchart of a data processing method according to an embodiment of this application;

FIG. 5 is a diagram of a structure of a data frame;

FIG. 6 is a diagram of a structure of an encoded data frame;

FIG. 7 is a diagram of a structure of a first bit set after a padding bit is added to an encoded data frame;

FIG. 8 is another diagram of a structure of a first bit set after a padding bit is added to an encoded data frame;

FIG. 9(a) is a diagram of a first implementation of convolutional interleaving according to an embodiment of this application;

FIG. 9(b) is a diagram of a second implementation of convolutional interleaving according to an embodiment of this application;

FIG. 10 is a diagram of an implementation of performing second FEC encoding on a second bit set according to an embodiment of this application;

FIG. 11 is a diagram of an implementation of a multi-lane parallel transmitter data processor according to an embodiment of this application;

FIG. 12 is a diagram of an implementation of data distribution according to an embodiment of this application;

FIG. 13 is a diagram of an application scenario of inner encoding according to an embodiment of this application;

FIG. 14 is a diagram of a structure of a data processing apparatus according to an embodiment of this application; and

FIG. 15 is another diagram of a structure of a data processing apparatus according to an embodiment of this application.

**DESCRIPTION OF EMBODIMENTS**

Embodiments of this application provide a data processing method and a related apparatus, to implement inner encoding with a higher gain, and improve performance of concatenated coding, thereby facilitating application in a 1.6T ZR scenario. It should be noted that in the specification, claims, and the accompanying drawings of this application, the terms "first", "second", and the like are intended to distinguish between similar objects but do not limit a specific order or sequence. It should be understood that the foregoing terms may be used interchangeably in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

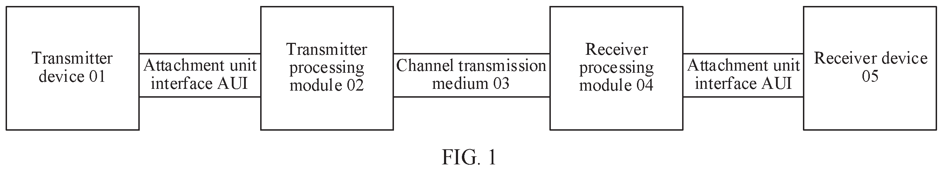

FIG. 1 is a diagram of a communication system to which an embodiment of this application is applied. As shown in FIG. 1, the communication system includes a transmitter device 01, a transmitter processing module 02, a channel transmission medium 03, a receiver processing module 04, and a receiver device 05. For example, the communication system is a data center network. The transmitter device 01 and the receiver device 05 each may be devices such as a switch or a router. The transmitter device 01 is also referred to as a host chip (host chip) at a transmitter, the receiver device 05 is also referred to as a host chip at a receiver, and the channel transmission medium 03 may be an optical fiber. The host chip is also sometimes referred to as a host device (host device). The transmitter device 01 may be connected to the transmitter processing module 02 through an attachment unit interface (attachment unit interface, AUI), and the receiver device 05 may be connected to the receiver processing module 04 through an AUI. The transmitter processing module 02 and the receiver processing module 04 each may be an optical module (optical module), an electrical module, a connector (connector), or another module that processes data in a data sending process. For example, the processing module may be an 800G ZR module (800G ZR module, a coherent optical module). In addition, the transmitter device 01, the transmitter processing module 02, the channel transmission medium 03, the receiver processing module 04, and the receiver device 05 in the communication system may all support bidirectional transmission, and can also support unidirectional transmission. This is not specifically limited herein.

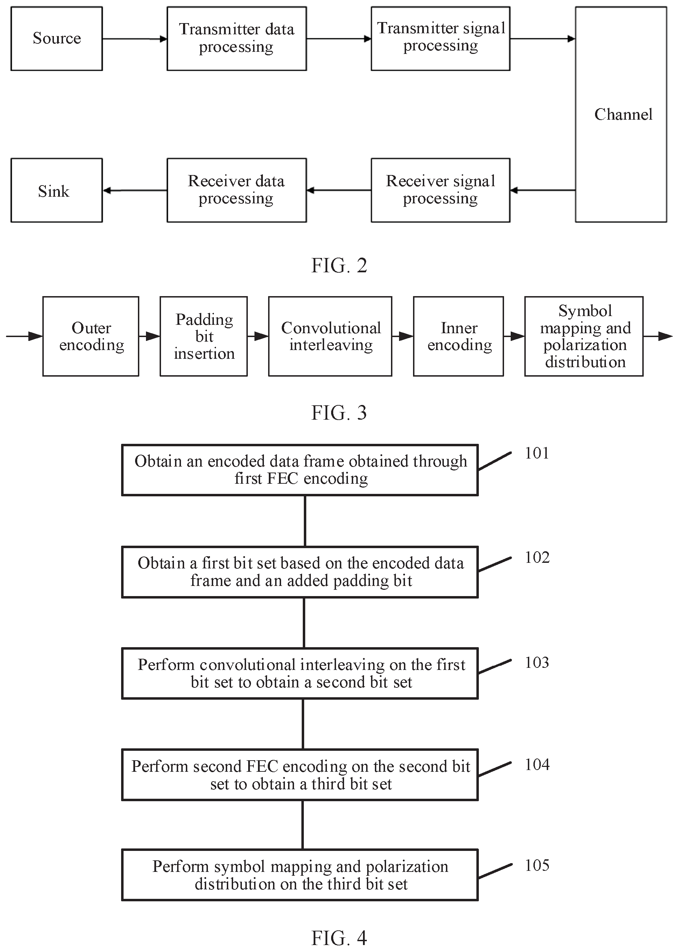

FIG. 2 is a diagram of another communication system to which an embodiment of this application is applied. As shown in FIG. 2, at a transmitter, a source provides a to-be-sent data stream. A transmitter data processor receives the data stream, performs data processing including encoding, interleaving, and modulation on the data stream to obtain a symbol data stream, and sends the symbol data stream to a transmitter signal processor for framing, and transmits the symbol data stream to a receiving device through a channel. After receiving a distorted signal caused by noise or other impairments in a channel, the receiving device sends the signal to a receiver signal processor for operations such as dispersion compensation, synchronization, and phase recovery. Then, the signal is sent to receiver data processor for performing demodulation, de-interleaving, and decoding, to restore original data and send the data to a sink. Transmitter data processing and transmitter signal processing shown in FIG. 2 may be applied to the transmitter processing module 02 shown in FIG. 1, and receiver data processor and receiver signal processing shown in FIG. 2 may be applied to the receiver processing module 04 shown in FIG. 1.

FIG. 3 is a diagram of an implementation of a transmitter data processor according to an embodiment of this application. As shown in FIG. 3, the transmitter data processor sequentially performs operations such as outer encoding, padding bit insertion, convolutional interleaving, inner encoding, symbol mapping, and polarization distribution on an input data stream. It should be understood that, during actual application, operations performed by the transmitter data processor include, but are not limited to, the operations shown in FIG. 3. For example, before convolutional interleaving is performed, an encoded data frame obtained through outer encoding may further be scrambled.

It should be understood that "inner" in an inner code and "outer" in an outer code are distinguished only based on a distance between the channel transmission medium and an execution body that performs an operation on data. An execution body that performs an operation on the inner code is closer to the channel transmission medium, and an execution body that performs an operation on the outer code is farther away from the channel transmission medium. In this embodiment of this application, FIG. 1 is used as an example. Because the transmitter processing module 02 sequentially encodes data twice and then sends encoded data to the channel transmission medium, data that is first encoded by the transmitter processing module 02 is farther away from the channel transmission medium, and data that is later encoded by the transmitter processing module 02 is closer to the channel transmission medium. Therefore, the data that is first encoded by the transmitter processing module 02 is referred to as outer encoded data, and the data that is later encoded by the transmitter processing module 02 is referred to as inner encoded data. Correspondingly, data that is first decoded by the receiver processing module 04 is referred to as inner decoded data, and data that is later decoded by the receiver processing module 04 is referred to as outer decoded data. In a possible implementation, both inner encoding and outer encoding use an FEC encoding scheme, to form a concatenated FEC transmission scheme. For example, the transmitter processing module 02 may perform outer encoding by using a staircase code, and perform inner encoding by using a Hamming (Hamming) code or a Bose-Chaudhuri-Hocquenghem (Bose-Chaudhuri-Hocquenghem, BCH) code.

It should be noted that the foregoing content is an example of an application scenario of the data processing method provided in embodiments of this application, and is not intended to limit the application scenario of the data processing method. A person of ordinary skill in the art may learn that, as a service requirement changes, the application scenario of the data processing method may be adjusted based on an application requirement. Examples are not listed one by one in embodiments of this application. The following mainly describes a data processing method applied to a data transmitter. A data processing method applied to a receiver may be understood as an inverse operation of the data processing method applied to the transmitter. Based on the data processing method applied to the transmitter, the data processing method applied to the receiver is also clear. The data processing method applied to the receiver is not described in detail in this application.

FIG. 4 is a schematic flowchart of a data processing method according to an embodiment of this application. The data processing method includes the following steps. Details are described below. It should be understood that, for ease of description, first FEC encoding described below may be considered as outer encoding described above, and second FEC encoding described below may be considered as inner encoding described above. The following may be understood based on this.

101: Obtain an encoded data frame obtained through first FEC encoding.

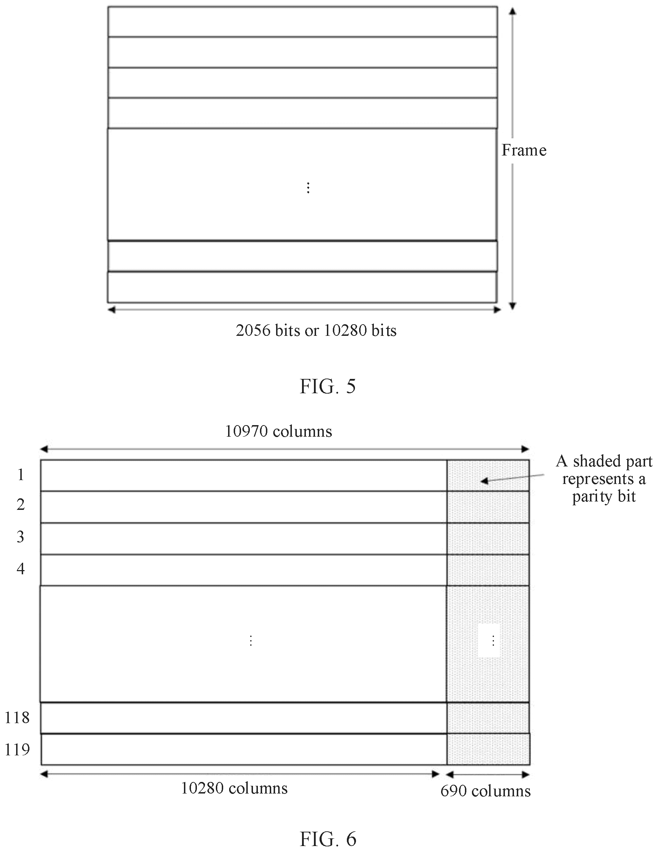

FIG. 5 is a diagram of a structure of a data frame. As shown in FIG. 5, a payload (payload) of the data frame includes a plurality of rows and a plurality of columns of bits, and each row may specifically include H=2056 bits or 10280 bits. For example, a payload of a 400G ZR frame includes 256 rows, and each row includes 10280 bits. For another example, a payload of an 800G ZR frame includes 512 rows, and each row includes 10280 bits; or a payload of an 800G ZR frame includes 2560 rows, and each row includes 2056 bits. r consecutive rows, totaling $r \times H$ bits, are obtained from payloads of a plurality of data frames, and outer encoding is performed to obtain the encoded data frame.

FIG. 6 is a diagram of a structure of an encoded data frame. As shown in FIG. 6, the encoded data frame includes r rows and w columns of bits. For example, r=119, and w=10970. 119 rows and 10280 columns of bits are information bits of the encoded data frame, and 119 rows and 690 columns of bits are parity bits of the encoded data frame. Alternatively, r=595, and w=2194. 595 rows and 2056 columns of bits are information bits of the encoded data frame, and 595 rows and 138 columns of bits are parity bits of the encoded data frame. It should be understood that outer encoding may specifically use a staircase code. For example, outer encoding may specifically use a staircase (512, 510) code. In some possible scenarios, the encoded data frame may also be referred to as an encoded data stream. That is, bits of the encoded data stream obtained through outer encoding may be consecutively arranged, and there is no row-column division.

102: Obtain a first bit set based on the encoded data frame and an added padding bit.

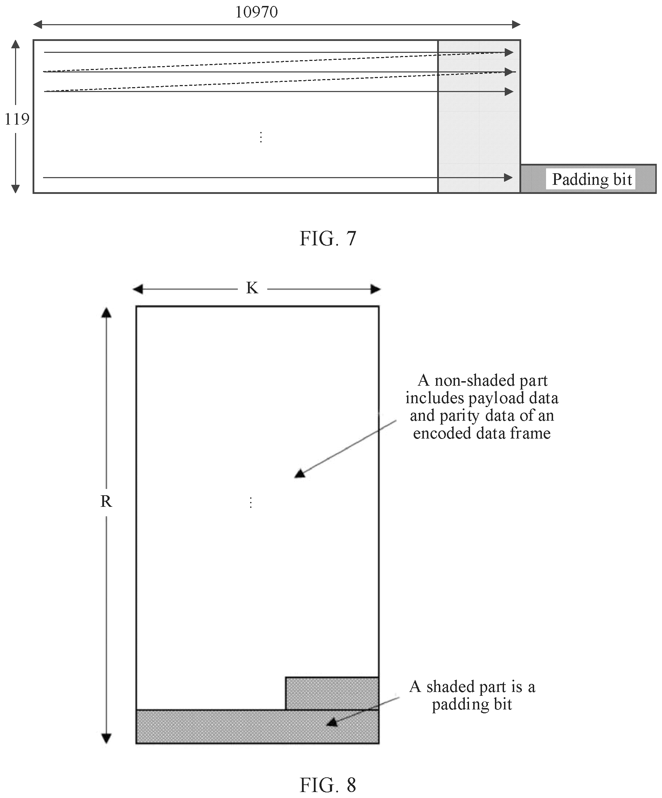

FIG. 7 is a diagram of a structure of a first bit set after a padding bit is added to an encoded data frame. As shown in FIG. 7, an example in which the encoded data frame includes $v=119 \times 10970$ bits is used. The first bit set includes $119 \times 10970 + d_{pad}$ bits, $d_{pad}$ is a quantity of padding bits, and $d_{pad}$ is an integer greater than or equal to 1. FIG. 8 is another diagram of a structure of a first bit set after a padding bit is added to an encoded data frame. As shown in FIG. 8, in some possible scenarios, the first bit set is distributed in rows and columns. For example, the first bit set includes R rows and K columns of bits, that is, $119 \times 10970 + d_{pad} = R \times K$. It should be understood that K may be understood as a length of an information sequence of each inner codeword obtained through inner encoding.

103: Perform convolutional interleaving on the first bit set to obtain a second bit set.

Specifically, convolutional interleaving is performed on the first bit set to obtain the second bit set whose data sequence is disordered. The following describes possible implementations of convolutional interleaving.

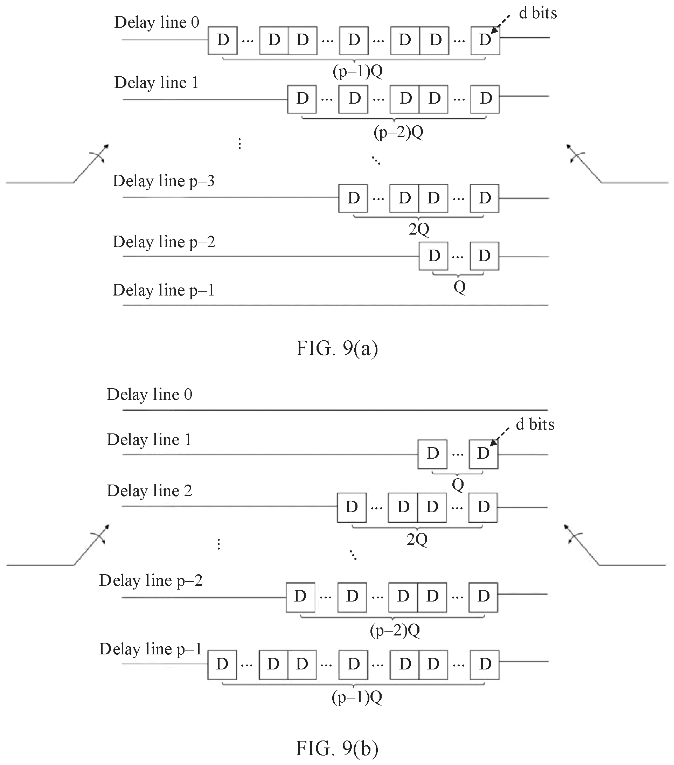

FIG. 9(a) is a diagram of a first implementation of convolutional interleaving according to an embodiment of this application. FIG. 9(b) is a diagram of a second implementation of convolutional interleaving according to an embodiment of this application. As shown in FIG. 9(a) and FIG. 9(b), a convolutional interleaver includes P delay lines (delay lines), and the convolutional interleaver delays, based on the P delay lines, data in the input first bit set to obtain the second bit set. P is an integer greater than 1, quantities of storage units included in the delay lines are different from each other, a delay line with a smallest quantity of storage units includes zero storage units, a difference between quantities of storage units of every two adjacent delay lines is Q, and each storage unit is configured to store d bits. The bits in the first bit set are sequentially input into the P delay lines based on sequence numbers of the P delay lines, d bits are input into each delay line for a single time and d bits are output from each delay line for a single time, and consecutive $P \times d$ bits output after convolutional interleaving include d bits output from each delay line. Q is an integer greater than or equal to 1, and d is an integer greater than or equal to 1. For example, the P delay lines respectively include zero storage units, Q storage units, 2Q storage units, ..., and (P-1) Q storage units, and each storage unit is configured to store d bits. In this case, the P delay lines respectively correspond to P delay values, and the delay values include 0 bits, $Q \times d$ bits, $2Q \times d$ bits, ..., and $(P-1)Q \times d$ bits, which may also be understood as that an interleaving depth of the convolutional interleaver is P. It should be noted that, in this application, the delay value is counted in a unit of a bit. A larger quantity of bits included in a delay value of a delay line indicates a longer delay (also referred to as a latency) for data through the delay line. It should be understood that, when the delay line includes no storage unit, a delay caused by the delay line is 0 bits, that is, transparent transmission without a delay is performed.

As shown in FIG. 9(a), the quantities of storage units in the P delay lines sequentially decrease based on the sequence numbers of the P delay lines. To be specific, a delay line 0 has (P-1)Q storage units, Q storage units are sequentially decreased for each delay line, and a delay line P-1 has zero storage units. As shown in FIG. 9(b), the quantities of storage units in the P delay lines sequentially increase based on the sequence numbers of the P delay lines. To be specific, a delay line 0 has zero storage units, Q storage units are sequentially increased for each delay line, and a delay line P-1 has (P-1)Q storage units.

It should be noted that, at a same moment, a switch (switch) for input and output of the convolutional interleaver is located on a same delay line. After d bits are input into a current delay line for a single time and d bits are output from the current delay line, the switch is switched to a next delay line, to ensure that the bits in the first bit set are sequentially input into the P delay lines based on the sequence numbers of the P delay lines, and the P×d consecutive bits output after convolutional interleaving include the d bits output from each delay line. A specific data read/write operation performed by the convolutional interleaver is as follows: d bits are read from a storage unit that is closest to an output port and that is in the current delay line. d bits stored in each storage unit in the current delay line are transferred to a next storage unit. Next, d bits are written into a storage unit that is closest to an input port and that is in the current delay line. Then, a next delay line is switched to, and the foregoing operations are repeated. The rest can be deduced by analogy.

It should be understood that when same parameters P, Q, and d are used, convolutional interleaving processing in FIG. 9(a) and convolutional interleaving processing in FIG. 9(b) are inverse operations of each other. In other words, when a transmitter processing module uses a convolutional interleaving structure shown in FIG. 9(a), convolutional de-interleaving corresponding to a receiver processing module that corresponds to the transmitter processing module uses a structure shown in FIG. 9(b). Similarly, when a transmitter processing module uses the convolutional interleaving structure shown in FIG. 9(b), convolutional de-interleaving corresponding to a receiver processing module that corresponds to the transmitter processing module uses the structure shown in FIG. 9(a).

The first bit set shown in FIG. 8 is used as an example. The second bit set also includes R rows and K columns of bits, and K bits in each row in the second bit set are K bits output from $\frac{K}{d}$ delay lines. In a possible scenario, K is exactly divisible by d, P×d is exactly divisible by K, and $R \times \frac{K}{d}$ is exactly divisible by P. In this manner, before convolutional interleaving is performed on the data in the first bit set, the switch for input and output of the convolutional interleaver is initialized to the delay line 0. After an entirety of the data in the first bit set is input into the convolutional interleaver, the switch for input and output of the convolutional interleaver returns to the delay line 0. This facilitates synchronization of a de-convolutional interleaver at a receiver.

104: Perform second FEC encoding on the second bit set to obtain a third bit set.

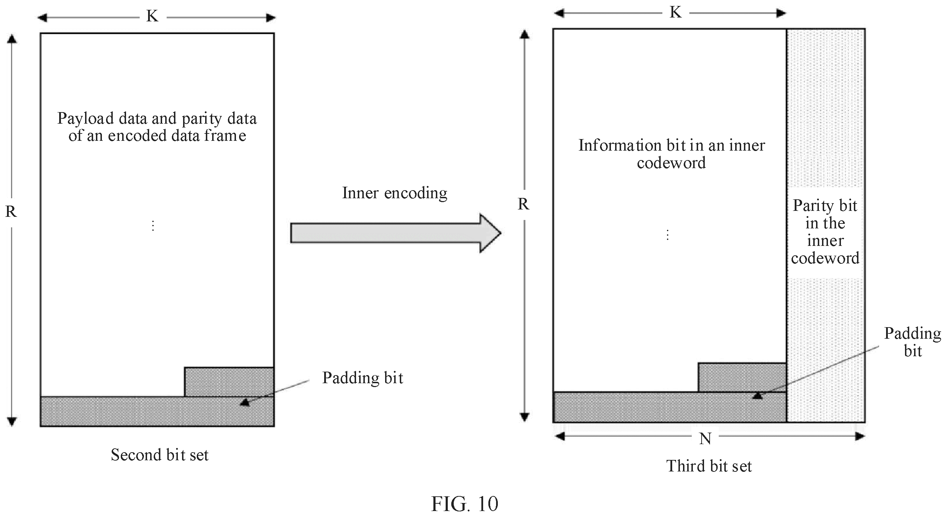

FIG. 10 is a diagram of an implementation of performing second FEC encoding on a second bit set according to an embodiment of this application. As shown in FIG. 10, the third bit set includes R codewords obtained through inner encoding, and each codeword includes K information bits and N-K parity bits, totaling N bits. An example in which the second bit set includes the R rows and K columns of bits is used. The third bit set obtained by performing inner encoding on the second bit set includes R rows and N columns of bits. N bits in each row in the third bit set may be considered as one inner codeword. It should be understood that, in this embodiment of this application, a quantity $d_{pad}$ of padding bits is not exactly divisible by K. To ensure that a BCH codeword that is with low complexity and that can correct 2 bits can be used as an inner codeword after the bits are padded, a codeword may be selected such that a quantity v of bits of the encoded data frame is not exactly divisible by a quantity K of information bits. By padding the $d_{pad}$ bits, a quantity of bits included in the first bit set is an integer quantity K of information bits, to achieve quick synchronization of an outer code after synchronization of an inner code.

In a possible implementation, inner encoding in this embodiment of this application may be specifically BCH encoding or extended BCH encoding over $GF(2^m)$ for 2-bit error correction. When a length of an inner codeword remains unchanged or is slightly reduced, an error correction capability of the inner codeword is improved to 2 bits, to improve performance of concatenated coding. GF is a finite field, and may also be referred to as a Galois field (Galois field), and $2^m$ represents an order of the finite field.

The following Table 1 provides several possible inner encoding schemes, where N represents a length of an inner codeword, K represents a length of an information bit in the inner codeword, t represents that an error correction capability of the inner codeword is t bits, and OH represents overheads of outer encoding and inner encoding. It should be noted that, to ensure that bits in each inner codeword can be evenly mapped to most significant bits (most significant bits, MSBs) and least significant bits (least significant bits, LSBs) of four components of a DP-16QAM symbol, a length N of the inner codeword should be an even number. To effectively improve performance of concatenated coding, a scheme is to effectively control decoding complexity when the length of the inner codeword is kept unchanged at 128 bits or the length of the inner codeword is slightly reduced, so that the error correction capability of the inner codeword is improved from correcting a 1-bit error to correcting a 2-bit error, where a corresponding codeword is a BCH code or an extended BCH code whose t=2.

Table 1

| Scheme | N | K | t | OH |
|--------|-----|-----|---|-------|
| 1 | 126 | 110 | 2 | 22.2% |
| 2 | 128 | 112 | 2 | 21.9% |
| 3 | 128 | 113 | 2 | 20.8% |

105: Perform symbol mapping and polarization distribution on the third bit set.

Specifically, symbol mapping and polarization distribution are performed on every 8 bits in the third bit set to obtain one DP-16QAM symbol. For example, M consecutive inner codewords are obtained from the third bit set, that is, M consecutive rows are obtained from the third bit set. Then, the M inner codewords, totaling N $\times$ M bits, are mapped to L DP-16QAM symbols, where L = N $\times$ M/8, that is, N $\times$ M is exactly divisible by 8. $S_l = (S_{XI}^l, S_{XQ}^l, S_{YI}^l, S_{YQ}^l)$ represents mapping the M inner codewords to an l$^{th}$ DP-16QAM symbol of the L DP-16QAM symbols, where 0≤l<L. $S_{XI}^l, S_{XQ}^l, S_{YI}^l$, and $S_{YQ}^l$ respectively represent an I (in-phase) component in an X polarization direction, a Q (quadrature-phase) component in the X polarization direction, an I (in-phase) component in a Y polarization direction, and a Q (quadrature-phase) component in the Y polarization direction of the l$^{th}$ DP-16QAM symbol. Considering that any component of a DP-16QAM symbol is obtained by mapping 2 bits in an inner codeword, and due to use of Gray mapping in a binary bit DP-16QAM symbol, error probabilities of 2 bits of any component mapped to the DP-16QAM symbol are inconsistent. To improve performance of concatenated coding, any component in $S_{XI}^l, S_{XQ}^l, S_{YI}^l$, and $S_{YQ}^l$ is obtained by mapping two consecutive bits in an m$^{th}$ inner codeword. In other words, any component of the DP-16QAM symbol is obtained by mapping two consecutive bits in a same codeword. In this way, 2 bits with different error probabilities in any component are evenly distributed to each inner codeword.

Further, a mapping scheme is to map N bits in an inner codeword to a same component of N/2 DP-16QAM symbol. For example, mapping relationships between the four components $S_{XI}^l, S_{XQ}^l, S_{YI}^l$, and $S_{YQ}^l$ of the l$^{th}$ DP-16QAM symbol and the M inner codewords are as follows:

$S_{XI}^l$ is obtained by mapping a ( $2 \times \left\lfloor l / \left(\frac{M}{4}\right) \right\rfloor$ )$^{th}$ bit and a ( $2 \times \left\lfloor l / \left(\frac{M}{4}\right) \right\rfloor + 1$ )$^{th}$ bit in a codeword $4 \times \left( l \% \left(\frac{M}{4}\right) \right)$ ;

$S_{XQ}^l$ is obtained by mapping a ( $2 \times \left\lfloor l / \left(\frac{M}{4}\right) \right\rfloor$ )$^{th}$ bit and a ( $2 \times \left\lfloor l / \left(\frac{M}{4}\right) \right\rfloor + 1$ )$^{th}$ bit in a codeword $4 \times \left( l \% \left(\frac{M}{4}\right) \right) + 1$ ;

$S_{YI}^l$ is obtained by mapping a ( $2 \times \left\lfloor l / \left(\frac{M}{4}\right) \right\rfloor$ )$^{th}$ bit and a ( $2 \times \left\lfloor l / \left(\frac{M}{4}\right) \right\rfloor + 1$ )$^{th}$ bit in a codeword $4 \times \left( l \% \left(\frac{M}{4}\right) \right) + 2$ ; and

$S_{YQ}^l$ is obtained by mapping a ( $2 \times \left\lfloor l / \left(\frac{M}{4}\right) \right\rfloor$ )$^{th}$ bit and a ( $2 \times \left\lfloor l / \left(\frac{M}{4}\right) \right\rfloor + 1$ )$^{th}$ bit in a codeword $4 \times \left( l \% \left(\frac{M}{4}\right) \right) + 3$ , where

a%b represents a modulo b, $\lfloor \cdot \rfloor$ represents rounding down, and $\lceil \cdot \rceil$ represents rounding up.

Further, considering inconsistent error probabilities of the four components, each inner codeword may be further evenly mapped to the four components. At least $2 \times \left\lfloor \frac{N}{8} \right\rfloor$ bits in the inner codeword are mapped to a same component of

$\left\lfloor \dfrac{N}{8} \right\rfloor$ DP-16QAM symbols, at most $2 \times \left\lceil \dfrac{N}{8} \right\rceil$ bits in the inner codeword are mapped to a same component of $\left\lceil \dfrac{N}{8} \right\rceil$

DP-16QAM symbols, $\lfloor a \rfloor$ represents rounding down a, and $\lceil a \rceil$ represents rounding up a.

In a possible implementation, every eight consecutive bits in the inner codeword are mapped to four different components of four DP-16QAM symbols. In another possible implementation, when N is a multiple of 8, eight consecutive bits in the inner codeword are mapped to one DP-16QAM symbol.

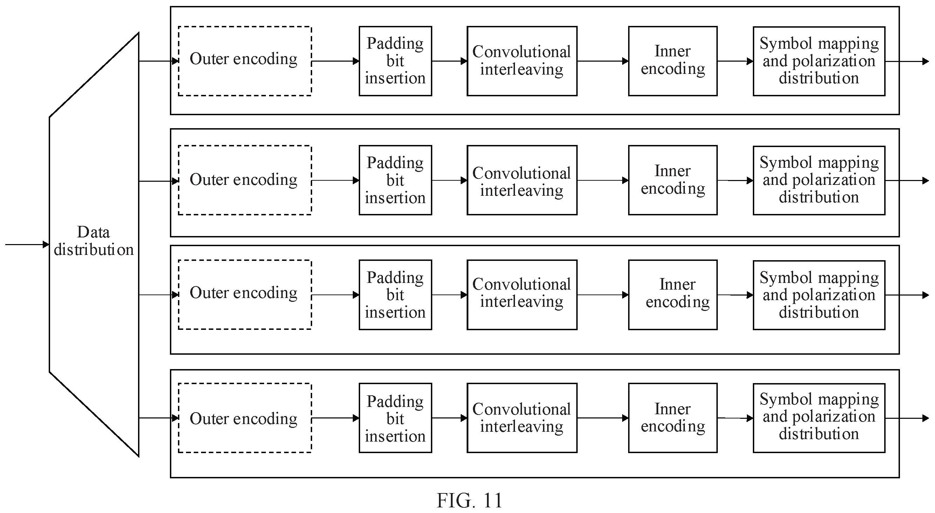

The foregoing describes the data processing method provided in embodiments of this application. It should be understood that, in some possible scenarios, considering that an FEC scheme may need to be compatible with throughput rates such as 1.6T, 800G, and 400G and considering hardware implementation in an ultra-high throughput rate, a multi-lane parallel data processing scheme may be further proposed based on the foregoing embodiments. FIG. 11 is a diagram of an implementation of a multi-lane parallel transmitter data processor according to an embodiment of this application. As shown in FIG. 11, an input data stream is first distributed to obtain four data streams, and then data processing is performed on each distributed data stream in the data processing manner shown in FIG. 3.

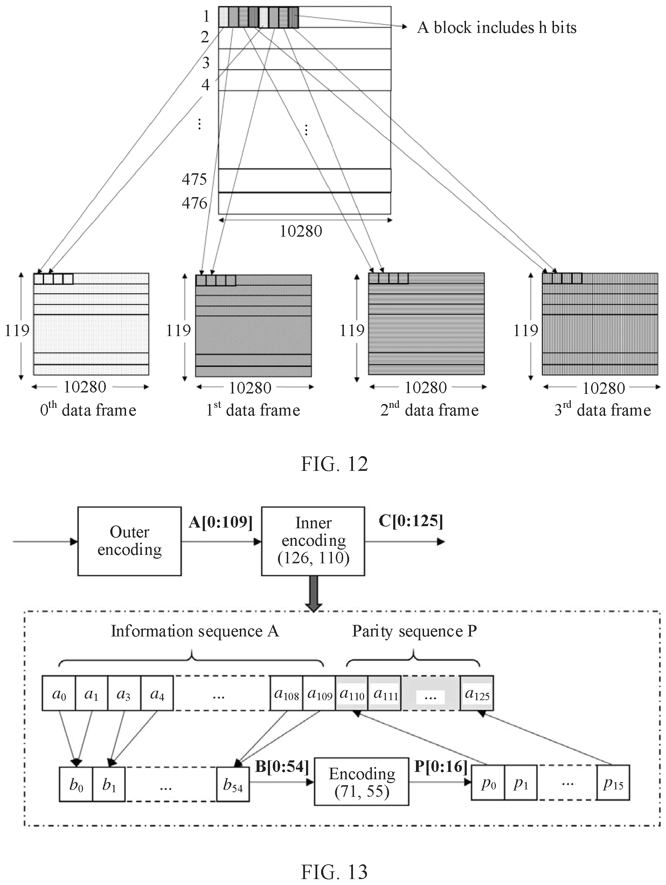

FIG. 12 is a diagram of an implementation of data distribution according to an embodiment of this application. As shown in FIG. 12, consecutive $4 \times 119 \times 10280$-bit data is first obtained, and then four data frames are obtained through distribution in a round robin manner at a granularity of h bits. Bits in each data frame are arranged in 119 rows and 10280 columns. Outer encoding is performed on each of the four data frames to obtain four encoded data frames, and subsequent data processing is performed on each encoded data frame in the manner shown in FIG. 3. It should be understood that $10280\%(4 \times h)=0$. For example, h=1, 257, 514, or 1285. This scheme can be highly compatible with throughput rates such as 1.6T, 800G, and 400G. In an example, when an input data frame is a 1.6T service, the data frame may be distributed to four lanes for processing as shown in FIG. 11. In another example, when an input data frame is an 800G service, the data frame may be distributed to two lanes for processing, and the other two lanes are disabled to reduce power consumption. In still another example, when an input data frame is a 400G service, data frame distribution may be omitted, data processing as shown in FIG. 3 is directly performed on the data frame, and the other three lanes are disabled to reduce power consumption.

The following provides several specific embodiments with reference to several different implementations of inner encoding.

Embodiment 1: Inner encoding uses (126, 110) encoding. To be specific, a length of an inner codeword is 126 bits, and the inner codeword includes 110 information bits.

In a first example, a quantity $d_{pad}$ of padding bits is 490. As shown in FIG. 8, the first bit set includes 11872 rows and 110 columns of bits, the convolutional interleaver includes P=16 delay lines, two adjacent delay lines differ by Q=2 storage units, and each storage unit includes d=110 bits. In a second example, a quantity $d_{pad}$ of padding bits is 50. As shown in FIG. 8, the first bit set includes 11868 rows and 110 columns of bits, the convolutional interleaver includes P=24 delay lines, two adjacent delay lines differ by Q=4 storage units, and each storage unit includes d=55 bits. In this case, 110 bits output from two consecutive delay lines in the convolutional interleaver are mapped to information bits of one inner code. It should be understood that, in comparison with the first example, in the second example, a quantity of padding bits is reduced, system redundancy is reduced, and a depth of the convolutional interleaver is increased, to improve performance of concatenated coding.

Inner encoding in Embodiment 1 may use (126, 110) double-extended (double-extended) BCH encoding, denoted as DE-BCH (126, 110). DE-BCH (126, 110) is a 2-bit CRC extended BCH code constructed over a finite field $GF(2^7)$ for 2-bit error correction. 16 parity bits in an inner codeword include a 2-bit cyclic redundancy check (cyclic redundancy check, CRC) extended parity bit. A generator polynomial of DE-BCH (126, 110) may be expressed as:

$$g_1(x) = M1(x)M3(x)(x^2 + 1) = (x^7 + x^3 + 1)(x^7 + x^3 + x^2 + x + 1)(x^2 + 1) = x^{16} + x^{14} + x^{11} + x^{10} + x^9 + x^7 + x^5 + x^3 + x + 1.$$

M1(x) and M3(x) respectively correspond to minimum polynomials of $\alpha^1$ and $\alpha^3$ in $GF(2^7)$, and $\alpha$ is a primitive element of the finite field $GF(2^7)$. A to-be-encoded information sequence with 110 bits is represented as A[0: 109] = $[a_0, a_1, \ldots, a_{109}]$, and each bit is used as a coefficient of an information polynomial with a highest degree 109. For example, $a_0$ is a first received bit in the to-be-encoded information sequence and is a coefficient of a highest-degree 109th term of the information polynomial, and $a_{109}$ is a last received bit in the to-be-encoded information sequence and corresponds to a coefficient of a 0th-degree term of the information polynomial. An information polynomial $m(x) = a_0 x^{109} + a_1 x^{108} + a_2 x^{107} + \cdots + a_{107} x^2 + a_{108} x + a_{109}$ can be obtained. $x^{16}m(x)$ is divided by $g_1(x)$ using modulo-2 division to obtain a remainder polynomial $r(x) = p_0 x^{15} + p_1 x^{14} + p_2 x^{13} + \cdots + p_{13} x^2 + p_{14} x + p_{15}$, that is, $r(x) = x^{16}m(x)(\text{modulo } g_1(x))$. Then, a code polynomial $c(x)$ with a highest degree 125 is obtained based on $c(x) = x^{16}m(x) + r(x)$, and a coefficient of each term in $c(x)$ is an encoded codeword. The codeword constructed in this manner is a system codeword. To be specific, a bit $c_0$ to a bit $c_{109}$ in a codeword C[0: 109] = $[c_0, c_1, \ldots, c_{125}]$ are respectively in one-to-one correspondence with a bit $a_0$ to a bit $a_{109}$ in the to-

be-encoded information sequence, and a bit $c_{110}$ to a bit $c_{125}$ in C[0:125] are respectively in one-to-one correspondence with a bit $p_0$ to a bit $p_{15}$ in a parity sequence.

In a possible implementation, M=4 consecutive inner codewords are selected from the third bit set obtained through inner encoding, and are mapped to 63 consecutive DP-16QAM symbols, and mapping relationships between four components $S^l_{XI}, S^l_{XQ}, S^l_{YI}$, and $S^l_{YQ}$ of an $l$th DP-16QAM symbol and the four inner codewords are as follows:

$S^l_{XI}$ is obtained by mapping a $(2 \times l + l\%2)^{th}$ bit and a $(2 \times l + (l+1)\%2)^{th}$ bit in a codeword $(2 \times l + \lfloor \frac{l}{2} \rfloor \%2)\%4$;

$S^l_{XQ}$ is obtained by mapping a $(2 \times l + l\%2)^{th}$ bit and a $(2 \times l + (l+1)\%2)^{th}$ bit in a codeword $(2 \times l + \lfloor \frac{l}{2} \rfloor \%2 + 1)\%4$;

$S^l_{YI}$ is obtained by mapping a $(2 \times l + l\%2)^{th}$ bit and a $(2 \times l + (l+1)\%2)^{th}$ bit in a codeword $(2 \times l + \lfloor \frac{l}{2} \rfloor \%2 + 2)\%4$; and

$S^l_{YQ}$ is obtained by mapping a $(2 \times l + l\%2)^{th}$ bit and a $(2 \times l + (l+1)\%2)^{th}$ bit in a codeword $(2 \times l + \lfloor \frac{l}{2} \rfloor \%2 + 3)\%4$, where

$$0 \leq l < 63.$$

In another possible implementation, M=8 or 16 consecutive inner codewords are selected from the third bit set obtained through inner encoding, and are mapped to 126 or 252 consecutive DP-16QAM symbols. To evenly map each inner codeword to each component of the DP-16QAM symbols, a total of eight consecutive bits from an $(8i)^{th}$ bit to an $(8i+7)^{th}$ bit in an $m$th inner codeword are mapped to four different components of four DP-16QAM symbols, and a total of 6 bits from a $120^{th}$ bit to a $125^{th}$ bit in the $m^{th}$ inner codeword are mapped to three different components of three DP-16QAM symbols. In addition, in a total of four consecutive inner codewords from a $(4j)^{th}$ inner codeword to a $(4j+3)^{th}$ inner codeword, a total of 8 bits from a $(2k)^{th}$ bit to a $(2k+1)^{th}$ bit in each codeword are mapped to one DP-16QAM symbol. $0 \leq m < M$, $0 \leq i < 15$, $0 \leq j < \lfloor \frac{M}{4} \rfloor$, and $0 \leq k < 63$. In a possible implementation, mapping relationships between four components $S^l_{XI}, S^l_{XQ}, S^l_{YI}$, and $S^l_{YQ}$ of an $l$th DP-16QAM symbol and the M inner codewords are as follows:

$S^l_{XI}$ is obtained by mapping a $( 2 \times \lfloor l/ \left( \frac{M}{4} \right) \rfloor )^{th}$ bit and a $( 2 \times \lfloor l/ \left( \frac{M}{4} \right) \rfloor + 1 )^{th}$ bit in a codeword $4 \times (l\% \left( \frac{M}{4} \right)) + (2 \times \lfloor \frac{l}{\left( \frac{M}{4} \right)} \rfloor + \lfloor \frac{l}{\left( \frac{M}{2} \right)} \rfloor \%2)\%4$;

$S^l_{XQ}$ is obtained by mapping a $( 2 \times \lfloor l/ \left( \frac{M}{4} \right) \rfloor )^{th}$ bit and a $( 2 \times \lfloor l/ \left( \frac{M}{4} \right) \rfloor + 1 )^{th}$ bit in a codeword $4 \times (l\% \left( \frac{M}{4} \right)) + (2 \times \lfloor \frac{l}{\left( \frac{M}{4} \right)} \rfloor + \lfloor \frac{l}{\left( \frac{M}{2} \right)} \rfloor \%2 + 1)\%4$;

$S^l_{YI}$ is obtained by mapping a $( 2 \times \lfloor l/ \left( \frac{M}{4} \right) \rfloor )^{th}$ bit and a $( 2 \times \lfloor l/ \left( \frac{M}{4} \right) \rfloor + 1 )^{th}$ bit in a codeword $4 \times (l\% \left( \frac{M}{4} \right)) + (2 \times \lfloor \frac{l}{\left( \frac{M}{4} \right)} \rfloor + \lfloor \frac{l}{\left( \frac{M}{2} \right)} \rfloor \%2 + 2)\%4$; and

$S^l_{YQ}$ is obtained by mapping a $( 2 \times \lfloor l/ \left( \frac{M}{4} \right) \rfloor )^{th}$ bit and a $( 2 \times \lfloor l/ \left( \frac{M}{4} \right) \rfloor + 1 )^{th}$ bit in a codeword

$$4 \times \left( l \% \left( \tfrac{M}{4} \right) \right) + \left( 2 \times \left\lfloor \tfrac{l}{\left( \tfrac{M}{4} \right)} \right\rfloor + \left\lfloor \tfrac{l}{\left( \tfrac{M}{2} \right)} \right\rfloor \% 2 + 3 \right) \% 4$$ , where
$$0 \leq l < 63 \times M/4.$$

FIG. 13 is a diagram of an application scenario of inner encoding according to an embodiment of this application. As shown in FIG. 13, first, two adjacent bits in the to-be-encoded information sequence A[0:109] are grouped into one group, and an exclusive OR operation is performed on 2 bits in each group to obtain a 55-bit sequence B[0:54]= $[b_0, b_1, \ldots, b_{54}]$. Then, DE-BCH (71, 55) encoding is performed on the sequence B, to generate 16 parity bits $[p_0, p_1, \ldots, p_{15}]$. DE-FEC (71, 55) is an extended BCH codeword that is constructed over the finite field $GF(2^7)$ and whose t=2. A generator polynomial of DE-FEC (71, 55) may be expressed as:

$$g_1(x) = M1(x)M3(x)(x^2 + 1) = (x^7 + x^3 + 1)(x^7 + x^3 + x^2 + x + 1)(x^2 + 1) = x^{16} + x^{14} + x^{11} + x^{10} + x^9 + x^7 + x^5 + x^3 + x + 1.$$

A total of 55 bits in the to-be-encoded information sequence B[0: 54] = $[b_0, b_1, \ldots, b_{54}]$ are used as coefficients of an information polynomial with a highest degree 54. For example, $b_0$ is a coefficient of a highest-degree 54$^{th}$ term of the information polynomial, and $b_{54}$ corresponds to a coefficient of a 0$^{th}$-degree term of the information polynomial, to obtain the information polynomial $m(x) = b_0 x^{54} + b_1 x^{53} + b_2 x^{52} + \cdots + b_{52} x^2 + b_{53} x + b_{54}$. $x^{16} m(x)$ is divided by $g_1(x)$ using modulo-2 division to obtain a remainder polynomial r(x), that is, $r(x) = x^{16} m(x)$ (modulo $g_1(x)$). 16 parity bits $[p_0, p_1, \ldots, p_{15}]$ are coefficients of the remainder polynomial r(x) from a highest-degree term to a lowest-degree term. Finally, the information sequence A and a parity sequence P form a complete codeword sequence of an inner code (126, 110), denoted as C [0:125] = $[c_0, c_1, \ldots, c_{125}]$, which may be represented as: $\begin{cases} c_i = a_i, & i \in [0,109] \\ c_i = p_{i-110}, & i \in [110,125] \end{cases}$. It can be learned that, in this inner encoding scheme, an encoding operation is transferred to a shorter codeword through exclusive OR grouping, to reduce decoding complexity.

Embodiment 2: Inner encoding uses (128, 112) encoding. To be specific, a length of an inner codeword is 128 bits, and the inner codeword includes 112 information bits.

In a first example, a quantity $d_{pad}$ of padding bits is 938. As shown in FIG. 8, the first bit set includes 11664 rows and 112 columns of bits, the convolutional interleaver includes P=16 delay lines, two adjacent delay lines differ by Q=2 storage units, and each storage unit includes d=112 bits. In a second example, a quantity $d_{pad}$ of padding bits is 42. As shown in FIG. 8, the first bit set includes 11656 rows and 112 columns of bits, the convolutional interleaver includes P=62 delay lines, two adjacent delay lines differ by Q=4 storage units, and each storage unit includes d=56 bits.

Inner encoding in Embodiment 2 may use (128, 112) double-extended (double-extended) BCH encoding, denoted as DE-BCH (128, 112). DE-BCH (128, 112) is an extended BCH code constructed over a finite field $GF(2^7)$ for 2-bit error correction. 16 parity bits in an inner codeword include a 2-bit CRC extended parity bit. A generator polynomial of DE-BCH (128, 112) may be expressed as:

$$g_1(x) = M1(x)M3(x)(x^2 + 1) = (x^7 + x^3 + 1)(x^7 + x^3 + x^2 + x + 1)(x^2 + 1) = x^{16} + x^{14} + x^{11} + x^{10} + x^9 + x^7 + x^5 + x^3 + x + 1.$$

M1(x) and M3(x) respectively correspond to minimum polynomials of $\alpha^1$ and $\alpha^3$ in $GF(2^7)$, and $\alpha$ is a primitive element of the finite field $GF(2^7)$. A to-be-encoded information sequence with 112 bits is represented as A[0: 111] = $[a_0, a_1, \ldots, a_{111}]$, and each bit is used as a coefficient of an information polynomial with a highest degree 111. For example, $a_0$ is a first received bit in the to-be-encoded information sequence and is a coefficient of a highest-degree 111$^{st}$ term of the information polynomial, and $a_{111}$ is a last received bit in the to-be-encoded information sequence and corresponds to a coefficient of a 0$^{th}$-degree term of the information polynomial. An information polynomial $m(x) = a_0 x^{111} + a_1 x^{110} + a_2 x^{109} + \ldots + a_{109} x^2 + + a_{110} x + a_{111}$ can be obtained. $x^{16} m(x)$ is divided by $g_1(x)$ using modulo-2 division to obtain a remainder polynomial $r(x) = p_0 x^{15} + p_1 x^{14} + p_2 x^{13} + \cdots + p_{13} x^2 + p_{14} x + p_{15}$, that is, $r(x) = x^{16} m(x) (modulo \ g_1(x))$. Then, a code polynomial c(x) with a highest degree 125 is obtained based on $c(x) = x^{16} m(x) + r(x)$, and a coefficient of each term in c(x) is an encoded codeword. The codeword constructed in this manner is a system codeword. To be specific, a bit $c_0$ to a bit $c_{111}$ in a codeword C[0: 127] = $[c_0, c_1, \ldots, c_{127}]$ are respectively in one-to-one correspondence with a bit $a_0$ to a bit $a_{111}$ in the to-be-encoded information sequence, and a bit $c_{112}$ to a bit $c_{127}$ in C[0:127] are respectively in one-to-one correspondence with a bit $p_0$ to a bit $p_{15}$ in a parity sequence.

In a possible implementation, M=4, 8, or 16 consecutive inner codewords are selected from the third bit set obtained through inner encoding, and are mapped to 16 × M=64 or 128 consecutive DP-16QAM symbols. To evenly map each inner codeword to each component of the DP-16QAM symbols, an (8i)$^{th}$ bit to an (8i+7)$^{th}$ bit in an m$^{th}$ inner codeword are mapped to four different components of four DP-16QAM symbols. In addition, in a total of four consecutive inner codewords from a (4j)<sup>th</sup> inner codeword to a (4j+3)<sup>th</sup> inner codeword, a total of 8 bits from a (2k)<sup>th</sup> bit to a (2k+1)<sup>th</sup> bit in each codeword are mapped to one DP-16QAM symbol. $0 \leq m < M$, $0 \leq i < 16$, $0 \leq j < \left\lfloor \frac{M}{4} \right\rfloor$, and $0 \leq k < 64$. The following provides two specific implementations. In one possible implementation, mapping relationships between four components $S_{XI}^l, S_{XQ}^l, S_{YI}^l$, and $S_{YQ}^l$ of an I<sup>th</sup> DP-16QAM symbol and the M inner codewords are as follows:

$S_{XI}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 0$;

$S_{XQ}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 1$;

$S_{YI}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 2$; and

$S_{YQ}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 3$, where

$$0 \leq l < 16 \times M.$$

In the other possible implementation, mapping relationships between four components $S_{XI}^l, S_{XQ}^l, S_{YI}^l$, and $S_{YQ}^l$ of an I<sup>th</sup> DP-16QAM symbol and the M inner codewords are as follows:

$S_{XI}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 0 ^ \wedge ( \left\lfloor \frac{l}{\left( \frac{M}{4} \right)} \right\rfloor \% 4)$;

$S_{XQ}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 1 ^ \wedge ( \left\lfloor \frac{l}{\left( \frac{M}{4} \right)} \right\rfloor \% 4)$;

$S_{YI}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword $4 \times \left( l \% \left( \frac{M}{4} \right) \right) + 2 ^ \wedge ( \left\lfloor \frac{l}{\left( \frac{M}{4} \right)} \right\rfloor \% 4)$; and

$S_{YQ}^l$ is obtained by mapping a ( $2 \times \left\lfloor l / \left( \frac{M}{4} \right) \right\rfloor$ )<sup>th</sup> bit and a ( $2 \times \left\lfloor l / \left( \frac{M}{4} \right) \right\rfloor + 1$ )<sup>th</sup> bit in a codeword

$$4 \times \left(l\%\left(\frac{M}{4}\right)\right) + 3 \wedge \left(\left\lfloor \frac{l}{\left(\frac{M}{4}\right)} \right\rfloor \%4\right), \text{ where}$$

$$0 \leq l < 16 \times M,$$

and ^ represents a bitwise exclusive OR operation.

It should be understood that, because the length of the inner codeword is 128, which is an integer multiple of 8, a simpler mapping manner is to map a total of 8 bits from an $(8*i)^{th}$ bit to an $(8*i+7)^{th}$ bit in an $m^{th}$ codeword in M=4, 8 or 16 inner codewords to an $(M \times i + m)^{th}$ DP-16QAM symbol in $16 \times M$ DP-16QAM symbols, where $0 \leq m < M$, and $0 \leq i < 15$.

Embodiment 3: Inner encoding uses (128, 113) encoding. To be specific, a length of an inner codeword is 128 bits, and the inner codeword includes 113 information bits.

In Embodiment 3, based on Embodiment 2, inner encoding is changed to extended BCH encoding for 2-bit error correction, to reduce system redundancy without reducing performance. In Embodiment 3, a quantity $d_{pad}$ of padding bits is 1754. As shown in FIG. 8, the first bit set includes 11568 rows and 113 columns of bits, the convolutional interleaver includes P=16 delay lines, two adjacent delay lines differ by Q=2 storage units, and each storage unit includes d=113 bits.

Inner encoding in Embodiment 3 may use (128, 113) extended (extended) BCH encoding, denoted as E-BCH (128, 113). E-BCH (128, 113) is a 1-bit CRC extended BCH code constructed over a finite field $GF(2^7)$ for 2-bit error correction. 15 parity bits in an inner codeword include a 1-bit CRC extended parity bit. A generator polynomial of E-BCH (128, 113) may be expressed as:

$$g_2(x) = M1(x)M3(x)(x + 1) = (x^7 + x^3 + 1)(x^7 + x^3 + x^2 + x + 1)(x + 1) = x^{16} + x^{14} + x^{10} + x^8 + x^7 + x^4 + x^3 + 1.$$

M1(x) and M3(x) respectively correspond to minimum polynomials of $\alpha^1$ and $\alpha^3$ in $GF(2^7)$, and $\alpha$ is a primitive element of the finite field $GF(2^7)$. A to-be-encoded information sequence with 112 bits is represented as A[0: 112] = $[a_0, a_1, ... , a_{112}]$, and each bit is used as a coefficient of an information polynomial with a highest degree 112. For example, $a_0$ is a first received bit in the to-be-encoded information sequence and is a coefficient of a highest-degree $112^{nd}$ term of the information polynomial, and $a_{112}$ is a last received bit in the to-be-encoded information sequence and corresponds to a coefficient of a $0^{th}$-degree term of the information polynomial. An information polynomial $m(x) = a_0x^{112} + a_1x^{111} + a_2x^{110} + ... + a_{110}x^2 + +a_{111}x + a_{112}$ can be obtained. $x^{15}m(x)$ is divided by $g_2(x)$ using modulo-2 division to obtain a remainder polynomial $r(x) = p_0x^{14} + p_1x^{13} + p_2x^{12} + \cdots + p_{12}x^2 + p_{13}x + p_{14}$, that is, $r(x) = x^{15}m(x)(\text{modulo } g_2(x))$. Then, a code polynomial $c(x)$ with a highest degree 128 is obtained based on $c(x) = x^{15}m(x) + r(x)$, and a coefficient of each term in $c(x)$ is an encoded codeword. The codeword constructed in this manner is a system codeword. To be specific, a bit $c_0$ to a bit $c_{112}$ in a codeword C[0: 127] = $[c_0, c_1, ... , c_{127}]$ are respectively in one-to-one correspondence with a bit $a_0$ to a bit $a_{112}$ in the to-be-encoded information sequence, and a bit $c_{113}$ to a bit $c_{127}$ in C[0:127] are respectively in one-to-one correspondence with a bit $p_0$ to a bit $p_{14}$ in a parity sequence. The third bit set obtained through inner encoding may be mapped to a DP-16QAM symbol in any manner in Embodiment 2.

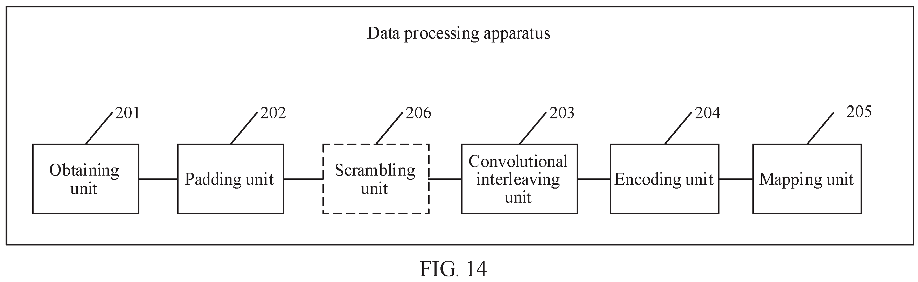

FIG. 14 is a diagram of a structure of a data processing apparatus according to an embodiment of this application. As shown in FIG. 14, the data processing apparatus includes an obtaining unit 201, a padding unit 202, a convolutional interleaving unit 203, an encoding unit 204, and a mapping unit 205. Optionally, the data processing apparatus further includes a scrambling unit 206. The obtaining unit 201 is configured to perform the operation in step 101, the padding unit 202 is configured to perform the operation in step 102, the convolutional interleaving unit 203 is configured to perform the operation in step 103, the encoding unit 204 is configured to perform the operation in step 104, and the mapping unit 205 is configured to perform the operation in step 105. It should be understood that the data processing apparatus provided in this application may alternatively be implemented in another manner. For example, division into the units in the foregoing apparatus is merely logical function division and may be other division during actual implementation. For example, a plurality of units or components may be combined or integrated into another system. In addition, functional units in embodiments of this application may be integrated into one processing unit, or may be independent physical units, or two or more functional units may be integrated into one processing unit. The integrated unit may be implemented in a form of hardware, or may be implemented in a form of a software functional unit.

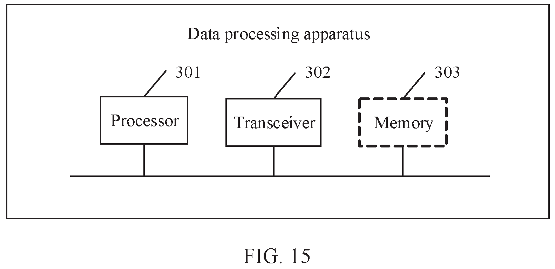

FIG. 15 is another diagram of a structure of a data processing apparatus according to an embodiment of this application. As shown in FIG. 15, the data processing apparatus includes a processor 301 and a transceiver 302. The processor 301 and the transceiver 302 are connected to each other through a line. Specifically, the transceiver 302 is configured to perform data sending and receiving operations, and the processor 301 is configured to perform operations other than data sending and receiving. In a possible implementation, the processor 301 may include the padding unit 202, the convolutional interleaving unit 203, the encoding unit 204, and the mapping unit 205 that are shown in FIG. 14, and the transceiver 302 includes the obtaining unit 201 shown in FIG. 14. Optionally, the data processing apparatus may further include a memory 303. The memory 303 is configured to store program instructions and data.

An embodiment of this application further provides a chip. The chip integrates a circuit and one or more interfaces that are configured to implement a function of the processor 301. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

    obtaining an encoded data frame obtained through first forward error correction FEC encoding, wherein the encoded data frame comprises v bits, and v is an integer greater than 1;
    obtaining a first bit set based on the encoded data frame and added $d_{pad}$ padding bits, wherein a quantity of bits in the first bit set is v+$d_{pad}$, and $d_{pad}$ is an integer greater than or equal to 1;
    performing convolutional interleaving on the first bit set to obtain a second bit set; and
    performing second FEC encoding on the second bit set to obtain a third bit set, wherein the third bit set comprises R codewords obtained through second FEC encoding, each codeword comprises K information bits and N-K parity bits, totaling N bits, R, N, and K are all integers greater than 1, v$d_{pad}$=R×K, and $d_{pad}$ is not exactly divisible by K.

2. The method according to claim 1, wherein performing convolutional interleaving on the first bit set to obtain the second bit set comprises:
    delaying the bits in the first bit set based on P delay lines, wherein P is an integer greater than 1, quantities of storage units comprised in the delay lines are different from each other, a delay line with a smallest quantity of storage units comprises zero storage units, a difference between quantities of storage units of every two adjacent delay lines is Q, each storage unit is configured to store d bits, input bits are sequentially input into the P delay lines based on sequence numbers of the P delay lines, d bits are input into each delay line for a single time and d bits are output from each delay line for a single time, consecutive P×d bits output after convolutional interleaving comprise d bits output from each delay line, and both Q and d are integers greater than or equal to 1.

3. The method according to claim 2, wherein K is exactly divisible by d, P×d is exactly divisible by K, and $R \times \dfrac{K}{d}$ is exactly divisible by P.

4. The method according to claim 2 or 3, wherein the second bit set comprises R rows and K columns of bits, K bits in each row in the second bit set are K bits output from $\dfrac{K}{d}$ delay lines, and performing second FEC encoding on the second bit set to obtain the third bit set comprises:
    performing second FEC encoding on the K bits in each row in the second bit set to obtain N bits in each codeword in the third bit set.

5. The method according to any one of claims 1 to 4, wherein after performing second FEC encoding on the second bit set to obtain the third bit set, the method further comprises:
    performing symbol mapping and polarization distribution on every 8 bits in the third bit set to obtain one dual-polarization DP-16QAM symbol, wherein any one of an I component in an X polarization direction, a Q component in the X polarization direction, an I component in a Y polarization direction, and a Q component in the Y polarization direction of the DP-16QAM symbol is obtained by mapping two consecutive bits in one codeword, and the X polarization direction and the Y polarization direction are orthogonal to each other.

6. The method according to claim 5, wherein at least $2 \times \left\lfloor \dfrac{N}{8} \right\rfloor$ bits in the codeword are mapped to a same component of

$\left\lceil \frac{N}{8} \right\rceil$ DP-16QAM symbols, at most $2 \times \left\lceil \frac{N}{8} \right\rceil$ bits in the codeword are mapped to a same component of $\left\lceil \frac{N}{8} \right\rceil$ DP-16QAM symbols, $\lfloor a \rfloor$ represents rounding down a, and $\lceil a \rceil$ represents rounding up a.

7. The method according to claim 6, wherein eight consecutive bits from an $(8i)^{th}$ bit to an $(8i+7)^{th}$ bit in the codeword are mapped to four different components of four DP-16QAM symbols, f consecutive bits from an ( $8 \times \left\lfloor \frac{N}{8} \right\rfloor$ )$^{th}$ bit to an $(N-1)^{th}$ bit in the codeword are mapped to f/2 different components of f/2 DP-16QAM symbols, $0 \le i < \left\lfloor \frac{N}{8} \right\rfloor$, $f = N - 8 \times \left\lfloor \frac{N}{8} \right\rfloor$, and two adjacent bits from each of four consecutive codewords, totaling 8 bits, are mapped to one DP-16QAM symbol.

8. The method according to claim 6, wherein N is exactly divisible by 8, and eight consecutive bits in the codeword are mapped to one DP-16QAM symbol.

9. The method according to any one of claims 1 to 8, wherein before obtaining the encoded data frame obtained through first FEC encoding, the method further comprises:

    performing data distribution on a first data stream to obtain four second data streams; and
    performing first FEC encoding on each second data stream to obtain the encoded data frame.

10. The method according to any one of claims 1 to 9, wherein before performing convolutional interleaving on the first bit set to obtain the second bit set, the method further comprises:
scrambling the first bit set.

11. The method according to any one of claims 1 to 10, wherein second FEC encoding uses BCH encoding or extended BCH encoding over a finite field GF($2^m$) for 2-bit error correction.

12. The method according to any one of claims 1 to 11, wherein the encoded data frame comprises r rows and w columns of bits; and r=119, and w=10970; or r=595, and w=2194.

13. The method according to any one of claims 1 to 12, wherein K=110, and N=126; K=112, and N=128; or K=113, and N=128.

14. The method according to any one of claims 2 to 13, wherein K=110, N=126, P=16, d=110, and $d_{pad}$=490; K=112, N=128, P=16, d=112, and $d_{pad}$=938; K=113, N=128, P=16, d=113, and $d_{pad}$=1754; K=112, N=128, P=62, d=56, and $d_{pad}$=42; or K=110, N=126, P=24, d=55, and $d_{pad}$=50.

15. A data processing apparatus, wherein the data processing apparatus comprises an obtaining unit, a padding unit, a convolutional interleaving unit, and an encoding unit, wherein

    the obtaining unit is configured to obtain an encoded data frame obtained through first forward error correction FEC encoding, wherein the encoded data frame comprises v bits, and v is an integer greater than 1;
    the padding unit is configured to obtain a first bit set based on the encoded data frame and added $d_{pad}$ padding bits, wherein a quantity of bits in the first bit set is v+$d_{pad}$, and $d_{pad}$ is an integer greater than or equal to 1;
    the convolutional interleaving unit is configured to perform convolutional interleaving on the first bit set to obtain a second bit set; and
    the encoding unit is configured to perform second FEC encoding on the second bit set to obtain a third bit set, wherein the third bit set comprises R codewords obtained through second FEC encoding, each codeword comprises K information bits and N-K parity bits, totaling N bits, R, N, and K are all integers greater than 1, v+$d_{pad}$=R×K, and $d_{pad}$ is not exactly divisible by K.

16. The data processing apparatus according to claim 15, wherein the convolutional interleaving unit is specifically configured to:
delay the bits in the first bit set based on P delay lines, wherein P is an integer greater than 1, quantities of storage units comprised in the delay lines are different from each other, a delay line with a smallest quantity of storage units comprises zero storage units, a difference between quantities of storage units of every two adjacent delay lines is Q, each storage unit is configured to store d bits, input bits are sequentially input into the P delay lines based on sequence numbers of the P delay lines, d bits are input into each delay line for a single time and d bits are output from each delay line for a single time, consecutive P×d bits output after convolutional interleaving comprise d bits output from each delay line, and both Q and d are integers greater than or equal to 1.

17. The data processing apparatus according to claim 16, wherein K is exactly divisible by d, P×d is exactly divisible by K, and $R \times \dfrac{K}{d}$ is exactly divisible by P.

18. The data processing apparatus according to claim 16 or 17, wherein the second bit set comprises R rows and K columns of bits, K bits in each row in the second bit set are K bits output from $\dfrac{K}{d}$ delay lines, and the encoding unit is specifically configured to:
perform second FEC encoding on the K bits in each row in the second bit set to obtain N bits in each codeword in the third bit set.

19. The data processing apparatus according to any one of claims 15 to 18, wherein the data processing apparatus further comprises a mapping unit, and the mapping unit is configured to:
perform symbol mapping and polarization distribution on every 8 bits in the third bit set to obtain one dual-polarization DP-16QAM symbol, wherein any one of an I component in an X polarization direction, a Q component in the X polarization direction, an I component in a Y polarization direction, and a Q component in the Y polarization direction of the DP-16QAM symbol is obtained by mapping two consecutive bits in one codeword, and the X polarization direction and the Y polarization direction are orthogonal to each other.

20. The data processing apparatus according to claim 19, wherein at least $2 \times \left\lfloor \dfrac{N}{8} \right\rfloor$ bits in the codeword are mapped to a same component of $\left\lfloor \dfrac{N}{8} \right\rfloor$ DP-16QAM symbols, at most $2 \times \left\lceil \dfrac{N}{8} \right\rceil$ bits in the codeword are mapped to a same component of $\left\lceil \dfrac{N}{8} \right\rceil$ DP-16QAM symbols, $\lfloor a \rfloor$ represents rounding down a, and $\lceil a \rceil$ represents rounding up a.

21. The data processing apparatus according to claim 20, wherein eight consecutive bits from an $(8i)^{th}$ bit to an $(8i+7)^{th}$ bit in the codeword are mapped to four different components of four DP-16QAM symbols, f consecutive bits from an ( $8 \times \left\lfloor \dfrac{N}{8} \right\rfloor$ )$^{th}$ bit to an $(N-1)^{th}$ bit in the codeword are mapped to f/2 different components of f/2 DP-16QAM symbols, $0 \leq i < \left\lfloor \dfrac{N}{8} \right\rfloor$, $f = N - 8 \times \left\lfloor \dfrac{N}{8} \right\rfloor$, and two adjacent bits from each of four consecutive codewords, totaling 8 bits, are mapped to one DP-16QAM symbol.

22. The data processing apparatus according to claim 20, wherein N is exactly divisible by 8, and eight consecutive bits in the codeword are mapped to one DP-16QAM symbol.

23. The data processing apparatus according to any one of claims 15 to 22, wherein the data processing apparatus further comprises a processing unit, and before the encoded data frame obtained through first FEC encoding is obtained, the processing unit is configured to:

perform data distribution on a first data stream to obtain four second data streams; and
perform first FEC encoding on each second data stream to obtain the encoded data frame.

24. The data processing apparatus according to any one of claims 15 to 23, wherein the data processing apparatus further comprises a scrambling unit, and before convolutional interleaving is performed on the first bit set to obtain the second bit set, the scrambling unit is configured to:
scramble the first bit set.

25. The data processing apparatus according to any one of claims 15 to 24, wherein second FEC encoding uses BCH encoding or extended BCH encoding over a finite field $GF(2^m)$ for 2-bit error correction.

26. The data processing apparatus according to any one of claims 15 to 25, wherein the encoded data frame comprises r rows and w columns of bits; and r=119, and w=10970; or r=595, and w=2194.

27. The data processing apparatus according to any one of claims 15 to 26, wherein K=110, and N=126; K=112, and N=128; or K=113, and N=128.

28. The data processing apparatus according to any one of claims 15 to 27, wherein K=110, N=126, P=16, d=110, and $d_{pad}$=490; K=112, N=128, P=16, d=112, and $d_{pad}$=938; K=113, N=128, P=16, d=113, and $d_{pad}$=1754; K=112, N=128, P=62, d=56, and $d_{pad}$=42; or K=110, N=126, P=24, d=55, and $d_{pad}$=50.

29. A chip, wherein the chip comprises a processor and a memory, the memory and the processor are connected to each other through a line, the memory stores instructions, and the processor is configured to perform the method according to any one of claims 1 to 14.

Transmitter device 01 — Attachment unit interface AUI — Transmitter processing module 02 — Channel transmission medium 03 — Receiver processing module 04 — Attachment unit interface AUI — Receiver device 05

FIG. 1

```
┌──────────┐     ┌─────────────────┐     ┌─────────────────┐     ┌──────────┐
│  Source  │ ──▶ │ Transmitter data│ ──▶ │Transmitter signal│ ─▶  │          │
│          │     │   processing    │     │   processing     │     │          │
└──────────┘     └─────────────────┘     └─────────────────┘     │          │
                                                                  │ Channel  │
┌──────────┐     ┌─────────────────┐     ┌─────────────────┐     │          │
│   Sink   │ ◀── │  Receiver data  │ ◀── │ Receiver signal │ ◀── │          │
│          │     │   processing    │     │   processing    │     │          │
└──────────┘     └─────────────────┘     └─────────────────┘     └──────────┘
```

FIG. 2

```
      ┌──────────┐   ┌─────────┐   ┌──────────────┐   ┌─────────┐   ┌──────────────┐
──▶   │  Outer   │─▶ │ Padding │─▶ │Convolutional │─▶ │  Inner  │─▶ │   Symbol     │ ──▶
      │ encoding │   │   bit   │   │ interleaving │   │encoding │   │ mapping and  │
      │          │   │insertion│   │              │   │         │   │ polarization │
      └──────────┘   └─────────┘   └──────────────┘   └─────────┘   │ distribution │
                                                                    └──────────────┘
```

FIG. 3

```
┌──────────────────────────────────────────────┐
│  Obtain an encoded data frame obtained through │⟋  101
│              first FEC encoding                │
└──────────────────────────────────────────────┘
                      │
┌──────────────────────────────────────────────┐
│   Obtain a first bit set based on the encoded  │⟋  102
│       data frame and an added padding bit      │
└──────────────────────────────────────────────┘
                      │
┌──────────────────────────────────────────────┐
│  Perform convolutional interleaving on the     │⟋  103
│      first bit set to obtain a second bit set  │
└──────────────────────────────────────────────┘
                      │
┌──────────────────────────────────────────────┐
│  Perform second FEC encoding on the second bit │⟋  104
│          set to obtain a third bit set         │
└──────────────────────────────────────────────┘
                      │
┌──────────────────────────────────────────────┐
│  Perform symbol mapping and polarization       │⟋  105
│        distribution on the third bit set       │
└──────────────────────────────────────────────┘
```

FIG. 4

2056 bits or 10280 bits

FIG. 5

10970 columns

A shaded part represents a parity bit

10280 columns          690 columns

FIG. 6

10970

119

Padding bit

FIG. 7

K

R

A non-shaded part includes payload data and parity data of an encoded data frame

A shaded part is a padding bit

FIG. 8

Delay line 0

Delay line 1

Delay line p−3

Delay line p−2

Delay line p−1

d bits

(p−1)Q

(p−2)Q

2Q

Q

## FIG. 9(a)

Delay line 0

Delay line 1

Delay line 2

Delay line p−2

Delay line p−1

d bits

Q

2Q

(p−2)Q

(p−1)Q

## FIG. 9(b)

FIG. 10

EP 4 776 538 A1

| Data distribution | Outer encoding | Padding bit insertion | Convolutional interleaving | Inner encoding | Symbol mapping and polarization distribution |

FIG. 11

1
2
3
4
⋮

475
476

10280

A block includes h bits

119 — 10280 —
0th data frame

119 — 10280 —
1st data frame

119 — 10280 —
2nd data frame

119 — 10280 —
3rd data frame

FIG. 12

Outer encoding → **A[0:109]** → Inner encoding (126, 110) → **C[0:125]**

Information sequence A          Parity sequence P

| $a_0$ | $a_1$ | $a_3$ | $a_4$ | ... | $a_{108}$ | $a_{109}$ | $a_{110}$ | $a_{111}$ | ... | $a_{125}$ |

| $b_0$ | $b_1$ | ... | $b_{54}$ | **B[0:54]** → Encoding (71, 55) → **P[0:16]** | $p_0$ | $p_1$ | ... | $p_{15}$ |

FIG. 13

Data processing apparatus

| 201 | 202 | 206 | 203 | 204 | 205 |

Obtaining unit — Padding unit — Scrambling unit — Convolutional interleaving unit — Encoding unit — Mapping unit

FIG. 14

Data processing apparatus

301

302

303

Processor

Transceiver

Memory

FIG. 15

## INTERNATIONAL SEARCH REPORT

| International application No. |
| --- |
| **PCT/CN2024/097179** |

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

VEN, CNABS, CNTXT, ENTXT, ENTXTC, IEEE, 3GPP: 交织, 卷积, 卷积交织, 内码, 前向纠错编码, 前向纠错码, 填充, 比特外码, fec, forward error correction, code word, inner code, outer code, interleaver, convolutional, bit

### C. DOCUMENTS CONSIDERED TO BE RELEVANT

| Category* | Citation of document, with indication, where appropriate, of the relevant passages | Relevant to claim No. |
| --- | --- | --- |
| A | CN 115706622 A (HUAWEI TECHNOLOGIES CO., LTD.) 17 February 2023 (2023-02-17) entire document | 1-29 |
| A | CN 113472362 A (HUAWEI TECHNOLOGIES CO., LTD.) 01 October 2021 (2021-10-01) entire document | 1-29 |
| A | CN 106464270 A (SAMSUNG ELECTRONICS CO., LTD.) 22 February 2017 (2017-02-22) entire document | 1-29 |
| A | CN 116156641 A (TSINGHUA UNIVERSITY) 23 May 2023 (2023-05-23) entire document | 1-29 |
| A | WO 2023143130 A1 (HUAWEI TECHNOLOGIES CO., LTD.) 03 August 2023 (2023-08-03) entire document | 1-29 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 July 2024** | **22 July 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/097179**

| Patent document cited in search report | | | Publication date (day/month/year) | Patent family member(s) | | | Publication date (day/month/year) |
|---|---|---|---|---|---|---|---|
| CN | 115706622 | A | 17 February 2023 | None | | | |
| CN | 113472362 | A | 01 October 2021 | None | | | |
| CN | 106464270 | A | 22 February 2017 | KR | 20190041449 | A | 22 April 2019 |
| | | | | KR | 102116113 | B1 | 27 May 2020 |
| | | | | CA | 2949034 | A1 | 26 November 2015 |
| | | | | CA | 2949034 | C | 12 March 2019 |
| | | | | EP | 3146635 | A1 | 29 March 2017 |
| | | | | EP | 3146635 | A4 | 14 February 2018 |
| | | | | EP | 3146635 | B1 | 04 May 2022 |
| | | | | MX | 2019014455 | A | 10 February 2020 |
| | | | | CA | 3031266 | A1 | 26 November 2015 |
| | | | | CA | 3031266 | C | 27 July 2021 |
| | | | | BR | 112016027106 | A2 | 08 June 2021 |
| | | | | KR | 20200058376 | A | 27 May 2020 |
| | | | | KR | 102413021 | B1 | 24 June 2022 |
| | | | | CA | 3121696 | A1 | 26 November 2015 |
| | | | | CA | 3121696 | C | 24 October 2023 |
| | | | | MX | 2016015204 | A | 03 March 2017 |
| | | | | MX | 370108 | B | 02 December 2019 |
| | | | | KR | 20220088839 | A | 28 June 2022 |
| | | | | KR | 102531095 | B1 | 10 May 2023 |
| | | | | KR | 20170103730 | A | 13 September 2017 |
| | | | | KR | 101928991 | B1 | 14 December 2018 |
| | | | | KR | 20180133832 | A | 17 December 2018 |
| | | | | KR | 101970723 | B1 | 22 April 2019 |
| | | | | US | 2019305801 | A1 | 03 October 2019 |
| | | | | US | 11218173 | B2 | 04 January 2022 |
| | | | | US | 2022103190 | A1 | 31 March 2022 |
| | | | | US | 11949433 | B2 | 02 April 2024 |
| | | | | KR | 20150134258 | A | 01 December 2015 |
| | | | | KR | 101775704 | B1 | 19 September 2017 |
| | | | | MX | 2019014454 | A | 10 February 2020 |
| CN | 116156641 | A | 23 May 2023 | None | | | |
| WO | 2023143130 | A1 | 03 August 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311285163